# EUROPEAN PATENT APPLICATION

(11) **EP 1 533 273 A1**
(43) Date of publication of application: **25.05.2005**
(21) Application number: 04025042.5
(22) Date of filing: 21.10.2004
(51) Int. Cl.: C01F 7/02, C01F 7/30, C08J 3/20

(54) **Aluminium hydroxide, aluminium hydroxide slurry and resin composition containing the same, and method for producing the same**

(30) Priority: 24.10.2003 JP 2003364406
(71) Applicant: Sumitomo Chemical Company, Limited, Tokyo 104-8260 (JP)
(72) Inventor: Nippa, Satoru, Chiba-shi, Chiba (JP)
(74) Representative: VOSSIUS & PARTNER

(57) **Abstract**

An aluminum hydroxide, an aluminum hydroxide slurry and a resin composition containing the same, and a method for producing the same are described. The aluminum hydroxide comprising at least one metal element selected from the group consisting of magnesium and manganese, and having a main crystal phase of boehmite and a particle with a shape of needle form and an average length of from about 10 nm to about 900 nm.

## Description

The present invention relates to an aluminum hydroxide, an aluminum hydroxide slurry and a resin composition containing the same, and a method for producing the same. Specifically, the present invention relates to an aluminum hydroxide showing, when mixed with a resin, excellent dispersibility in the resin, aluminum hydroxide slurry containing the aluminum hydroxide, and a method for producing the same.

Aluminum hydroxide is known as a filler for resin, and used for improving the physical properties (e.g. surface hardness and impact resistance) of a resin. For the purpose of improving the physical properties of a resin composition obtained by kneading aluminum hydroxide and a resin, there are investigations of improving dispersibility to resin of aluminum hydroxide as a filler for resin. (JP-A No. 2003-128916)

However, in conventional methods, it is difficult to obtain an article of a resin composition having sufficient surface hardness.

An object of the present invention is to provide an aluminum hydroxide suitable for a filler capable of imparting sufficient surface hardness to an article of a resin, and an aluminum hydroxide slurry containing the same.

Another object of the present invention is to provide a resin composition, further, a method for producing the above-mentioned aluminum hydroxide.

The present invention provides an aluminum hydroxide comprising at least one selected from
magnesium and manganese, having a main crystal phase of boehmite and a particle with a shape of needle form and an average length of from 10 nm to 900 nm.

Also, the present invention provides an aluminum hydroxide slurry containing the above-mentioned aluminum hydroxide and a solvent, and a resin composition containing the above-mentioned aluminum hydroxide and a resin.

Further, the present invention provides a method for producing aluminum hydroxide comprising steps of:
(i) hydrothermally treating a intermediate alumina at 150°C or more in the presence of at least one selected from of magnesium carboxylate and manganese carboxylate, and
(ii) washing the obtained aluminum hydroxide.

The aluminum hydroxide of the present invention may be used as a filler capable of imparting sufficient surface hardness to an article of a resin, and the aluminum hydroxide slurry of the present invention may be used for a coating liquid to produce a film for improving the surface hardness of an artcle of a resin, and an article obtained from the resin composition of the present invention containing this aluminum hydroxide has sufficient surface hardness.

According to the method for producing an aluminum hydroxide of the present invention, aluminum hydroxide which may be used as a filler capable of imparting sufficient surface hardness to an article of a resin can be obtained easily.
Fig. 1 shows a scanning electron micrograph of intermediate alumina used in Examples 1 and 2.
Fig. 2 shows a transmission electron micrograph of aluminum hydroxide obtained in Example 1.
Fig. 3 shows a transmission electron micrograph of aluminum hydroxide obtained in Example 2.

### Aluminum hydroxide according to the present invention

The aluminum hydroxide has a main crystal phase of boehmite. Boehmite is one of aluminum hydroxides, and represented by the formula Al₂O₃·H₂O. The crystal phase may be determined by an X-ray powder diffraction technique.

Further, the aluminum hydroxide contains a metal element except aluminum. The metal element is at least one selected from magnesium and manganese. The content of these metal elements is usually about 2 wt% or more, preferably about 5 wt% or more and usually about 15 wt% or less, preferably about 10 wt% or less, based on the aluminum hydroxide.

Furthermore, the aluminum hydroxide has a primary particle with a shape of needle form and a size of about 10 nm or more, preferably about 50 nm or more, and about 900 nm or less, preferably about 500 nm or less, further preferably about 200 nm or less, in terms of average length of primary particle. If the average length of primary particle is too small, when filled in resin, a surface hardness of the article obtained from the resin composition may not be sufficient. On the other hand, if the average length of primary particle is too large, filling amount thereof may be increased to obtain sufficient surface hardness of an article produced from a resin composition. The primary particle has usually an average width of about 5nm or more and about 30nm or less, and an aspect ratio (=average length/average width) of about 5 or more, preferably about 7 or more, and about 30 or less. The average length and the average width of primary particle may be measured from an electron micrograph.

Usually, the aluminum hydroxide of the present invention contains a particulate aggregating a plurality of primary particles and the particulate having an average particulate size of about 0.1 µm or more. The average particulate size on the weight basis is defined as the size of 50% point on the weight cumulative distribution. It is preferable that the average particulate size of aluminum hydroxide is larger in the viewpoint of improving handling thereof, and for example; it is preferably about 1 µm or more. On the other hand, when the average particulate size is too large, the average particulate size has little effect on improving handling performance, therefore, it is usually about 10 µm or less, preferably about 5 µm or less.

The aluminum hydroxide of the present invention may be that which has been surface-treated. By use of surface-treated aluminum hydroxide as a filler, the impact resistance of the resulting resin composition is improved.

The aluminum hydroxide is, when mixed with a solvent, easily dispersed in the solvent. The aluminum hydroxide is, when kneaded with a resin, easily dispersed in the resin.

### Aluminum hydroxide slurry according to the present invention

The aluminum hydroxide slurry of the present invention contains the aluminum hydroxide described above and a solvent. Examples of the solvent include water and alcohols. The content of aluminum hydroxide in a solvent is usually about 0.1 wt% or more, preferably about 1 wt% or more and about 25wt% or less, preferably about 10wt% or less.

The aluminum hydroxide slurry contains usually particulate of 45 µm or more in the amount of about 0.1 wt% or less. The aluminum hydroxide slurry may be applied on the surface of an article of a resin, or a film may be formed from the slurry and a resin may be laminated thereon.

### Resin composition according to the present invention

The resin composition comprises the aluminum hydroxide described above and a resin. The resin is selected from various thermoplastic resins and thermosetting resins. Examples of the thermoplastic resin include olefin polymers such as olefin homopolymers (polyethylene, polypropylene, polybutene), olefin copolymers (ethylene-propylene random copolymer, ethylene-propylene block copolymer, propylene-butene random copolymer, propylene-butene block copolymer, ethylene-propylene-butene copolymer); polyesters such as aromatic polyesters such as polyethylene terephthalate and polybutylene terephthalate, and polycaprolactone and polyhydroxy butyrate; and aliphatic polyamides such as nylon-6, nylon-66, nylon-10, nylon-12 and nylon-46. Examples of the thermosetting resin include epoxy resins; vinyl ester resins; phenol resins; unsaturated polyester resins; polyimides; polyurethanes; and melamine resins. Usually, the amount of aluminum hydroxide is about 0.05 parts by weight or more and about 100 parts by weight or less based on 100 parts by weight of a resin.

### Method for preparing aluminium hydroxide according to the present invention

The above-mentioned aluminum hydroxide having a specific crystal phase and a specific particle shape as described above and containing a specific hetero metal element is obtained, for example, by a method comprising steps of:
(i) hydrothermally treating intermediate alumina is conducted in the presence of at least one selected from magnesium carboxylate and manganese carboxylate, and
(ii) washing the obtained aluminum hydroxide.

The intermediate alumina used as a raw material in step (i) (referred to as transition alumina or activated alumina in some cases) has usually a main crystal phase of χ, η, γ or ρ. The preferable intermediate alumina is obtained by a method in which aluminum hydroxide having a main crystal phase of gibbsite is put into a heated gas flow and calcined, a so-called flash calcination method. The intermediate alumina has a average particle diameter of preferably about 10 µm or less, further preferably about 5 µm or less. When the average particle diameter of intermediate alumina is large, coarse intermediate alumina may remain after hydrothermal treatment, leading to deterioration of dispersibility.

Hydrothermal treatment is conducted in the presence of water containing a carboxylate. Examples of the carboxylate includes a magnesium carboxylate such as magnesium formate, magnesium acetate, magnesium propionate, magnesium oxalate, magnesium glutarate, magnesium succinate, magnesium malonate, magnesium maleate, magnesium adipate, and magnesium citrate; or a manganese carboxylate such as manganese formate, manganese acetate, manganese propionate, manganese oxalate, manganese glutarate, manganese succinate, manganese malonate, manganese maleate, manganese adipate and manganese citrate. The concentration of the carboxylate in water is about 0.01 mol/l or more, preferably about 0. 1 mol/l or more and less than about 5 mol/l, preferably about 3 mol/l or less.

Hydrothermal treatment is conducted at about 150°C or more, preferably about 180°C or more and usually about 300°C or less, preferably about 250°C or less. The time of hydrothermal treatment is usually about 1 hour or more and about 50 hours or less.

The washing in step(ii) may be advantageously conducted using a solvent such as water and alcohols. By washing, a carboxylate present on the surface of aluminum hydroxide may be removed.

Further, the obtained aluminum hydroxide may be surface-treated. The surface treatment may be conducted by a known method.

### EXAMPLES

The following examples will illustrate the present invention in more detail, but do not limit the scope of the invention. The methods for measuring properties in the examples are as described below.

### Main crystal phase:

An X-ray diffraction spectrum was measured by using an X-ray diffractometer (trade name: "RAD-RB RU-200", manufactured by Rigaku Denki K.K.). Regarding peaks in this spectrum, a crystal phase having high relative peak strength was defined as a main crystal phase.

### Magnesium, manganese content (wt%):

The content was measured by using a fluorescent X-ray analyzer.

Average length of primary particle (nm), Average width of primary particle (nm):
A sample was photographed by using a transmission electron microscope, length and width of primary particle of each of 10 or more any particles in this photo were measured, and average values of the measured values were defined as an average length of primary particle and an average width of primary particle, respectively.

### Average particulate size (µm):

The particulate size distribution was measured by using a laser scattering particulate size distribution analyzer [trade name: "Microtrac HRA" , manufactured by Lead and Northrup Corp.], and the average particulate size was obtained from the resulting particulate size distribution curve.

### Surface hardness (Rockwell value):

A specimen having a thickness of 5 mm was prepared by press-molding at 180°C, and the surface hardness of the specimen was measured according to JIS-K-7202. A steel sphere R was used, and the value was represented in R scale. Higher the value, the higher the surface hardness.

### Average particle diameter (µm):

The particle diameter distribution was measured by using an analyzer [trade name: "Microtrac HRA" , manufactured by Lead and Northrup Corp.], and the average particle diameter was obtained from the resulted particle diameter distribution curve.

### Example 1

### [Preparation of intermediate alumina]

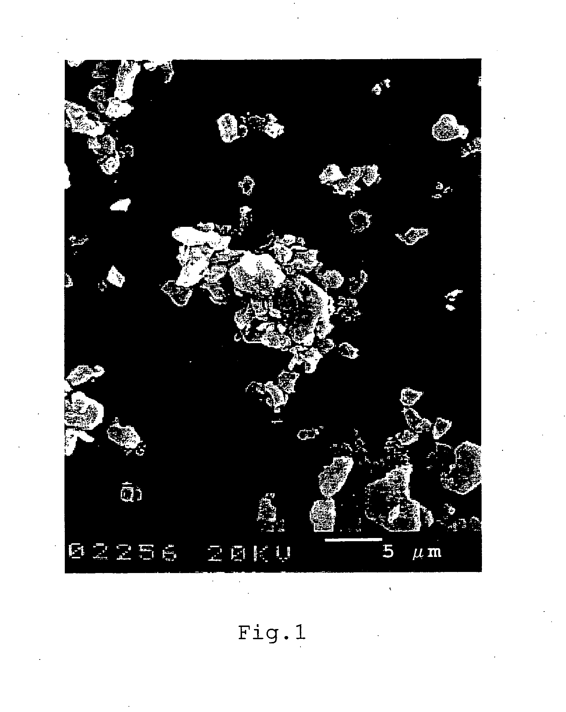

Aluminum hydroxide (trade name: "C-31", main crystal phase: gibbsite, manufactured by Sumitomo Chemical Co., Ltd.) was ground in a vibration mill and put into a 700°C air stream to be calcined. The resulting intermediate alumina has a main crystal phase of ρ, and has an average particle diameter of 3 µm. The electron micrograph of this intermediate alumina is shown in Fig. 1.

### [Production of aluminum hydroxide]

56 g of the intermediate alumina described above and 744 g of water were mixed, to this mixture was added 161.6 g of magnesium acetate tetra-hydrate (guaranteed reagent, manufactured by Wako Pure Chemical Industries Ltd.) and this were dissolved, to obtain a slurry containing intermediate alumina dispersed into magnesium acetate aqueous solution. The concentration of magnesium acetate in the aqueous solution was 0.94 mol/L.

The slurry was charged into an autoclave having an internal volume of 1 L (manufactured by Taiatsu Glass Kogyo K.K.), and hydrothermally treated under conditions of a stirring rotation of 500 rpm, a temperature of 200°C and a duration of 24 hours. The slurry was cooled and a solid was separated from the slurry, then, the solid was washed. In washing, the solid and 5 1 of water were mixed, and this mixture was separated into solid and liquid by a centrifugal separator and the solid was recovered. The washing was repeated three times in total. The washed solid was dried in an oven to obtain aluminum hydroxide.

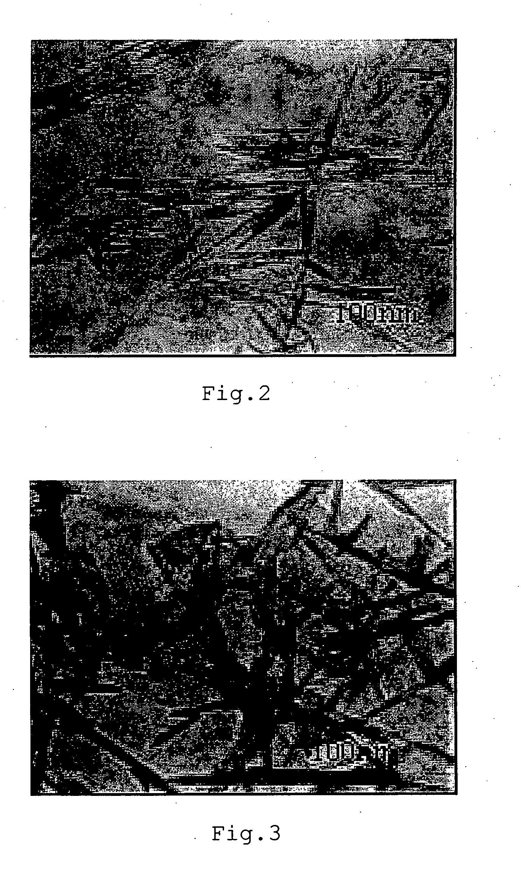

The resulted aluminum hydroxide contained a magnesium content of 8.1 wt% and had a main crystal phase of boehmite and a primary particle with a shape of needle form, an average length of 150 nm, an average width of 10 nm and an aspect ratio of 15. The electron micrograph of the aluminum hydroxide is shown in Fig. 2. The aluminum hydroxide had an average particulate size of 3 µm.

### [Production and evaluation of resin composition]

5 parts by weight of the obtained aluminum hydroxide, 95 parts by weight of an ethylene-propylene copolymer (ethylene-propylene block copolymer, limiting viscosity of whole ethylene-propylene block copolymer [η]: 1.4 dl/g, limiting viscosity of propylene homopolymer portion [η]: 1.2 dl/g, ethylene unit content: 5.9 wt%, weight ratio of ethylene-propylene random copolymer portion to whole copolymer: 15 wt%, limiting viscosity of ethylene-propylene random copolymer portion [η]: 2.3dl/g) and additives were mixed, then, this mixture was melt-kneaded under conditions of a set temperature of 180°C and a screw rotation of 500 rpm by using a twin-axis extruder (trade name "KZW15-45 MG", identical direction rotation type: screw size 15 mm × 45 L/D, manufactured by Techno Bell), to obtain an article of resin composition. The surface hardness of the article of resin composition is shown in Table 1. The additives used here were trade name "AR-2", manufactured by Kogyo Seiyaku K.K., trade name "GA-80", manufactured by Sumitomo Chemical Co., Ltd. and trade name "ULTRANOX626", manufactured by GE Specialties Chemicals, and the mixing amounts thereof were 0.05 wt%, 0.05 wt% and 0.1 wt%, respectively, based on the ethylene-propylene copolymer.

### Comparative Example 1

The same operation as in Example 1 was conducted excepting that aluminum hydroxide (trade name "C-301", main crystal phase: gibbsite, average particle diameter: 1 µm, manufactured by Sumitomo Chemical Co., Ltd.) was used instead of intermediate alumina in [Production of aluminum hydroxide] in Example 1. The resulted aluminum hydroxide had a main crystal phase of boehmite and a primary particle with a shape of sphere form and an average diameter of 1000 nm. The aluminum hydroxide was subjected to the same operation as in [Production and evaluation of resin composition] in Example 1. The evaluated results are shown in Table 1.

**Table 1**

| | Surface hardness (Rockwell value) |
|---|---|
| Example 1 | 93 |
| Comparative example 1 | 88 |

### Example 2

The same operation as in Example 1 was conducted except that 183 g of manganese acetate tetra-hydrate (concentration of manganese acetate in the aqueous solution was 0.93 mol/l) was used instead of magnesium acetate, to obtain aluminum hydroxide. The resulted aluminum hydroxide contained a manganese content of 12 wt%, and had a main crystal phase of boehmite and a primary particle with a shape of needle form, an average length of 150 nm, an average width of 20 nm and an aspect ratio of 7.5. The aluminum hydroxide had an average particulate size of 3 µm. The electron micrograph of the aluminum hydroxide is shown in Fig. 3. When the aluminum hydroxide obtained here is used, the same resin composition as obtained in Example 1 is obtained.

## Claims

1. An aluminum hydroxide comprising at least one metal element selected from magnesium and manganese, and having a main crystal phase of boehmite and a particle with a shape of needle form and an average length of from about 10 nm to about 900 nm.

2. The aluminum hydroxide according to Claim 1, wherein the average length is from about 50 nm to about 500 nm.

3. The aluminum hydroxide according to Claim 2, wherein the average length is from about 50 nm to about 200 nm.

4. The aluminium hydroxide according to any one of claims 1 to 3, wherein the content of the metal element is from about 2 wt% to about 15wt% based on aluminum hydroxide.

5. The aluminium hydroxide according to any one of claims 1 to 4, wherein the aluminum hydroxide, when measured by using a laser scattering particulate size distribution analyzer, has an average particulate size of about 0.1 µm or more.

6. The aluminium hydroxide according to any one of claims 1 to 5, wherein the aluminum hydroxide is an aluminum hydroxide which has been surface-treated.

7. An aluminum hydroxide slurry containing the aluminum hydroxide according to any of Claims 1 to 6 and a solvent.

8. The aluminum hydroxide slurry according to Claim 7, wherein the solvent is at least one selected from water and alcohols.

9. The aluminum hydroxide slurry according to Claim 7 or 8, wherein the concentration of aluminum hydroxide in the slurry is from about 0.1wt% to about 25wt%.

10. A resin composition containing the aluminum hydroxide according to any of Claims 1 to 6 and a resin.

11. The resin composition according to Claim 10, wherein the resin is at least one selected from thermoplastic resins and thermosetting resins.

12. The resin composition according to Claim 10 or 11, wherein the amount of aluminum hydroxide is from about 0.05 parts to about 100 parts by weight based on 100 parts by weight of a resin.

13. A method for producing aluminum hydroxide comprising steps of:
(i) hydrothermally treating an intermediate alumina at about 150°C or more in the presence of at least one selected from magnesium carboxylate and manganese carboxylate, and
(ii) washing the obtained aluminum hydroxide.

14. The method for producing aluminum hydroxide according to Claim 13, wherein the intermediate alumina has a main crystal phase of χ, η, γ or ρ.

15. The method for producing aluminum hydroxide according to Claim 13, wherein the intermediate alumina is obtained by flash calcining aluminum hydroxide having a main crystal phase of gibbsite.

16. The method for producing aluminum hydroxide according to any one of claims 13 to 15, wherein the intermediate alumina has an average particle diameter of about 10 µm or less.

17. The method for producing aluminum hydroxide according to any one of claims 13 to 16, wherein the concentration of the carboxylate is from about 0.01 mol/l to about 5 mol/l.
